# EUROPEAN PATENT SPECIFICATION

(11) **EP 1 548 299 B1**
(45) Date of publication and mention of the grant of the patent: **14.02.2007**
(21) Application number: 05003032.9
(22) Date of filing: 31.07.2002
(51) Int. Cl.: F16B 37/06, F16B 27/00

(54) **Strip of fasteners, methods of forming and feeding the same**
Streifen aus Befestigungselementen sowie Verfahren zu deren Herstellung und Zuführung
Elément de fixation reliés en série, et son procédé de progression/formage

(30) Priority: 15.08.2001 US 312448 P
(43) Date of publication of application: 29.06.2005
(62) Divisional of application: 02765904.4
(73) Proprietor: Whitesell International Corporation, Taylor, MI 48180 (US)
(72) Inventor: Ladouceur, Harold, A., Livonia, MI (US); Vrana, John, J., Michigan 48307 (US)
(74) Representative: Heselberger, Johannes

(56) References cited:
- EP-A- 0 893 204
- US-A- 3 711 931
- US-A- 4 124 050
- US-A- 5 913 421

## Description

### FIELD OF THE INVENTION

This invention relates to fastener systems, particularly self-attaching fastener systems, including pierce and clinch nuts having a central projecting pilot portion and flange portions on at least opposed sides of the pilot portion. More specifically, this invention relates to a strip of fasteners and methods of forming and feeding such fasteners to an installation head.

### BACKGROUND OF THE INVENTION

Self-attaching fastener systems developed by the predecessor in interest of the applicant (Multifastener Corporation) have been used for many years in mass production applications, including the automotive industry. Such fasteners generally include a central projecting pilot portion having a threaded or unthreaded bore therethrough and flange portions on opposed sides of the pilot portion. Universal^{™} pierce and clinch nuts commercially available from the assignee of this application include a groove extending into opposed sides of the projecting pilot portion adjacent the flange portions. When used as a clinch nut, the pilot portion is received through an opening in a panel and the panel is then received on panel supporting or engaging surfaces of the flange portions. The panel is then deformed by a die button into the grooves in the pilot portion, permanently attaching the fastener to the panel. When used as a pierce nut, the end of the pilot portion is used as a punch, piercing an opening in the panel, which receives the pilot portion as described.

In the Hi-Stress^{™} nut, also commercially available from the Assignee of the present application, the panel receiving grooves are located in the flange portions on opposed sides of the pilot portion. In the preferred embodiment of the Hi-Stress™ nut, the grooves are dovetail-shaped having a restricted opening at the panel receiving surface of the flange portions providing significantly improved pull-off strength. When used as a pierce nut, the pilot portion pierces an opening in the panel and the panel adjacent the opening is then deformed by a die member into the dovetail-shaped grooves and against the bottom wall of the grooves providing improved push-off strength. Both types of pierce and clinch nuts described above are generally installed in mass production applications by a die press. One platen of the die press includes an installation head which receives the pierce or clinch nuts and the opposed die platen includes a die button which deforms the metal into the grooves of the nut as described above. U.S. Patent No. 3,140,010, describes a method and apparatus for dispensing fasteners of the type described above which includes adhesively fixing the fasteners to a continuous web.

The prior patents describe a number of methods of preorienting fasteners in a carrier strip, including an integral frangible carrier portion or methods of attaching fasteners on a wire or plurality of wires. U.S. Patent No. 3,711,931, assigned to the predecessor in interest of the applicant, describes a method of forming a continuous strip of preoriented self-attaching fasteners including pierce and clinch nuts of the type described above, wherein wire grooves are formed on the back bearing surface of the nut opposite the pilot portion. The pierce or clinch nuts are then oriented in end to end relation with the wire grooves coaxially aligned and a frangible continuous wire is then inserted or rolled into the wire grooves and the back face of the fastener is deformed over the wires by a knurling tool. Self-attaching fasteners of the type described above are now supplied by the assignee of this application in bulk and strip form as disclosed in the above referenced U.S. Patent No. 3,711,931.

The self-attaching fasteners described above are fed to the installation head by a reciprocal pawl having a finger received in the threaded bore. In a typical installation, the installation head includes a chuck or feeder which, upon opening of the die press, feeds a nut into the plunger passage of the installation head, such that a nut is located in the "ready position" following each stroke of the press.

Self-attaching fasteners of the type described above are presently formed by a rolling process, starting with a continuous metal wire, wherein the desired cross-section of the fastener is first formed in a continuous strip of metal, which is then rolled into a coil. The coil is then fed through a punch, which punches or pierces the nut bore, and the strip is then fed to a cut-off tool which cuts the strip into discreet fasteners each having a projecting pilot portion and flange portions on opposed sides of the pilot portion. One problem with this method of forming self-attaching fasteners, particularly in mass production applications, is that the bore may not be accurately centered in the pilot portion because the exact position of the strip is difficult to control. At present, the strip is positioned opposite the punch by moving the strip until it contacts a stop. However, the strip may not fully engage the stop or bounce off the stop. This is a particular problem in mass production applications because only two bores are punched at a time and therefore the strip must be repeatedly located opposite the punches. As will be understood, the bore of a nut must be accurately located in the pilot for proper function.

There are several problems associated with the present method of forming a preoriented fastener strip as disclosed in the above referenced U.S. Patent No. 3,711,931, and the feeder system described above. The method of installing a self-attaching fastener of the type described above is disclosed in U.S. Patent No. 3,648,747 assigned to the predecessor-in-interest of the assignee of this application. First, location of the wires on the rear bearing face of the pierce or clinch nut reduces the bearing area for the punch which installs the fastener in a panel. During installation of a fastener strip of the type described in the above referenced U.S. Patent No. 3,711,931, the reciprocating punch of the installation head engages and drives the rear face of the fastener into the panel or panel opening. It would therefore be desirable to eliminate the wire grooves and wires from the rear face of the fastener to increase the bearing area. It should also be understood that following installation of the pierce or clinch nut to a panel, a second panel, such as a bracket or other component, is secured to the panel which receives the self-attaching fastener. It would thus be desirable to increase the bearing area of the self-attaching fastener by eliminating the wire grooves.

Another problem associated with forming a preoriented strip of fasteners as disclosed in the above referenced patent is that the frangible wires interconnecting the self-attaching fasteners may be pulled out of the wire grooves during installation of the fastener in a panel, creating a sharp wire end on the rear surface of the fastener. Further, the adjacent surfaces of the fasteners in the preoriented strip are spaced a predetermined distance for installation. Thus, when the frangible wires are severed during the installation process, these sharp wire ends protrude from the wire grooves adjacent the rear bearing surface of the fastener following installation which also creates a potential handling hazard. Another problem with the method of attaching the self-attaching fasteners in a preoriented fastener strip as disclosed in the above referenced patent is movement of the nuts on the wires prior to and during feeding of the nuts to the installation head which may cause misfeeding. Finally, another problem with the present method of feeding self-attaching nuts to an installation head is damage to the thread cylinder of the threaded bore through the pilot portion. As set forth above, self-attaching fasteners are normally fed to the installation head by a feed pawl having a finger received in the threaded bore. The feed pawl may damage the thread cylinder.

### SUMMARY OF THE INVENTION

The present invention provides a continuous strip of fasteners as defined in claim 7 and methods of feeding and forming fasteners to an installation head as defined in claims 1 and 12, respectively.

The strip of fasteners of this invention, method of forming self-attaching fasteners and method of feeding a strip of fasteners to an installation head of this invention solve the above problems associated with the prior art without additional expense. As set forth above, the self-attaching fasteners of this invention preferably includes a projecting pilot portion adapted to be received through an opening in a panel, and a flange portion adjacent the pilot portion having a panel receiving or bearing surface. In the continuous preoriented strip of self-attaching fasteners of this invention, however, the wire groove is formed in the panel receiving surface adjacent the pilot portion, such that upon installation of the fastener to a panel, the panel overlies the wire groove and the wire. This method of installation thus eliminates the problems associated with sharp wire ends or tangs because the wire ends are completely covered by the panel following installation. The preferred method of forming a preoriented strip of self-attaching fasteners of this invention thus includes forming a wire groove in the panel receiving surface of the flange portion of the self-attaching fastener and inserting a continuous frangible wire in the wire groove, interconnecting the fasteners in a continuous preoriented strip. The preferred embodiments of self-attaching fasteners, as described above, include a flange portion on opposed sides of the projecting pilot portion. In such embodiments, the fastener strip preferably includes a wire groove in the panel receiving surface on opposed sides of the pilot portion and parallel continuous frangible wires are received in the wire grooves and secured to the fasteners. The method further includes preorienting or aligning the fasteners, such that the wire grooves are coaxially aligned and the continuous frangible wires are preferably installed in the grooves by rolling.

The self-attaching fasteners of this invention and method of forming same may be used with various embodiments of fasteners, including both the Universal^{™} fastener systems and the Hi-Stress^{™} fastener systems described above and other self-attaching fastener systems. In the Hi-Stress^{™} fastener system, the method includes first forming a panel receiving groove in the flange portions adjacent the pilot portion, preferably on both sides of the pilot portion. The method then includes forming a wire groove in the lower surface or bottom wall of the panel receiving groove, preferably both grooves, and then inserting a continuous frangible wire in the wire grooves through the panel receiving grooves and securing the wires to the fasteners.

In the most preferred embodiment of this invention, the bottom wall of the wire groove or grooves includes a plurality of spaced pockets. As used herein, the term "pockets" may include either depressions or upstanding ribs, defining pockets therebetween. The continuous frangible wire is then deformed against the bottom wall of the wire groove, filling the pockets, and preventing movement of the fasteners on the wires.

The method of feeding a preoriented strip of fasteners to an installation head and preoriented fastener strip of this invention also eliminates damage to the thread cylinder. The method of forming a preoriented strip of fasteners of this invention includes forming a plurality of discreet self-attaching fasteners, preferably of the type described above, wherein each of the fasteners includes a projecting pilot portion, a flange portion on opposed sides of the pilot portion having a panel receiving surface adjacent the pilot portion and side surfaces. The method then includes forming a plurality of preferably equally spaced abutment surfaces on at least one of the sides of each of the fasteners, orienting the fasteners in end to end relation, preferably in nearly abutting relation, and then interconnecting the fasteners by a frangible connector element forming a preoriented strip of fasteners having abutment surfaces on at least one side of the preoriented fastener strip. The preoriented fastener strip is then fed to an installation head by receiving a driving member seriatim in the spaced abutment surfaces and moving the driving member to drive the strip of preoriented fasteners to the installation head. In the preferred embodiment, the abutment surfaces are equally spaced notches or grooves in the side wall of the fasteners. This method thus eliminates contact of the driving member with the bore of the fasteners.

Another advantage of the method of forming and feeding a preoriented strip of fasteners of this invention is that the abutment surfaces may be formed in the rolled metal strip from which the fasteners are formed and used to accurately locate the nut bore in the fasteners formed from the strip. This method includes forming a continuous metal strip having the cross-section of the self-attaching fasteners to be formed including a continuous central projecting pilot portion and flange portions on opposed sides of the pilot portion, wherein the flange portions include a bearing face spaced below the end face of the pilot portion and side faces. The method of forming self-attaching female fasteners of this invention then includes forming a plurality of equally spaced notches in at least one side face of the continuous strip, locating the continuous strip opposite a cylindrical punch by receiving a locating member in one of the notches and moving the punch to punch a cylindrical bore in the strip, then moving the strip to successively receive the locating member in a second notch in the strip opposite the punch to punch a plurality of equally spaced cylindrical bores in the strip and finally locating the strip opposite a cut-off tool by receiving a locating member in a notch in the strip and then moving the cut-off tool to at least partially severe the self-attaching female fasteners from the strip, preferably completely severing the strip to form discreet fasteners. This method assures that the nut bore is accurately located through the pilot portion of each nut, eliminating a problem with the present method of forming self-attaching female fasteners. In the preferred method, the fasteners are completely severed from the strip and the fasteners are then interconnected by frangible connectors as described above.

In the preferred embodiments of the method of forming self-attaching fasteners or a preoriented strip of fasteners and method of feeding a preoriented strip of fasteners of this invention, the abutment surfaces are defined by substantially equally spaced notches or grooves in the side wall of the continuous metal strip from which the fasteners are formed or the preoriented strip which is fed to the installation head, the method includes receiving a drive member seriatim in the spaced notches and moving the drive member to drive the strip, thus eliminating contact between the drive member and the thread cylinder of the fasteners. In one embodiment, each of the fasteners in the strip includes a plurality of equally spaced grooves or notches. In another embodiment, the notches are formed between adjacent fasteners by chamfering the adjacent ends of the fasteners. In one embodiment, the drive member is a rotatable wheel having a plurality of radial spokes which are received in the notches in the fastener strip, such that rotating the drive member drives the fastener strip. In another embodiment, the drive member is a pawl having a finger configured to be received in the notches and the pawl is reciprocated to drive the fasteners or the fastener strip. As will be understood, however, the abutment surfaces can also be defined by protuberances or projections extending from the side walls of the nut strip.

Other advantages and meritorious features of the present invention will be more fully understood from the following description of the preferred embodiments, the appended claims and the drawings, a brief description of which follows.

### BRIEF DESCRIPTION OF THE DRAWINGS

Figure 1 is a side elevation of one embodiment of a self-attaching fastener of this invention;

Figure 2 is a side cross-sectional view of Figure 1 in the direction of view arrows 2-2;

Figure 3 is an end cross-sectional view of Figure 2 in the direction of view arrows 3-3;

Figure 4 is a side view illustrating the method of attaching frangible wires in the self-attaching fastener illustrated in Figures 1 to 3;

Figure 5 is a partial side view of the self-attaching fastener illustrated in the previous figures with a frangible wire located in the wire groove;

Figure 6 is a partial end cross-sectional view of Figure 5 in the direction of view arrows 6-6;

Figure 7 is a partial side cross-sectional view similar to Figure 5 with the wire located below the bottom surface of the panel groove;

Figure 8 is a side cross-sectional view of the self-attaching fastener as shown in the previous figures following installation of the fastener in a panel;

Figure 9 is a top cross-sectional view of the self-attaching fasteners described above in a preoriented strip;

Figure 10 is an elevation of the preoriented fastener strip of Figure 9 and one preferred embodiment of a feed apparatus;

Figure 11 is an enlarged partial side cross-sectional view of Figure 8 illustrating a preferred embodiment of the installation of the panel in the panel groove;

Figure 12 is a bottom view of an alternative embodiment of the preoriented fastener strip

Figure 13 illustrates a feed mechanism for the fastener strip of Figure 12;

Figure 14 is a top elevation of an alternative embodiment of a self-attaching fastener;

Figure 15 is a cross-sectional view of the fastener illustrated in Figure 14 with frangible wires in the wire grooves;

Figure 16 is a side cross-sectional view of a panel installation of the fastener illustrated in Figures 14 and 15.

### DETAILED DESCRIPTION OF A PREFERRED EMBODIMENT

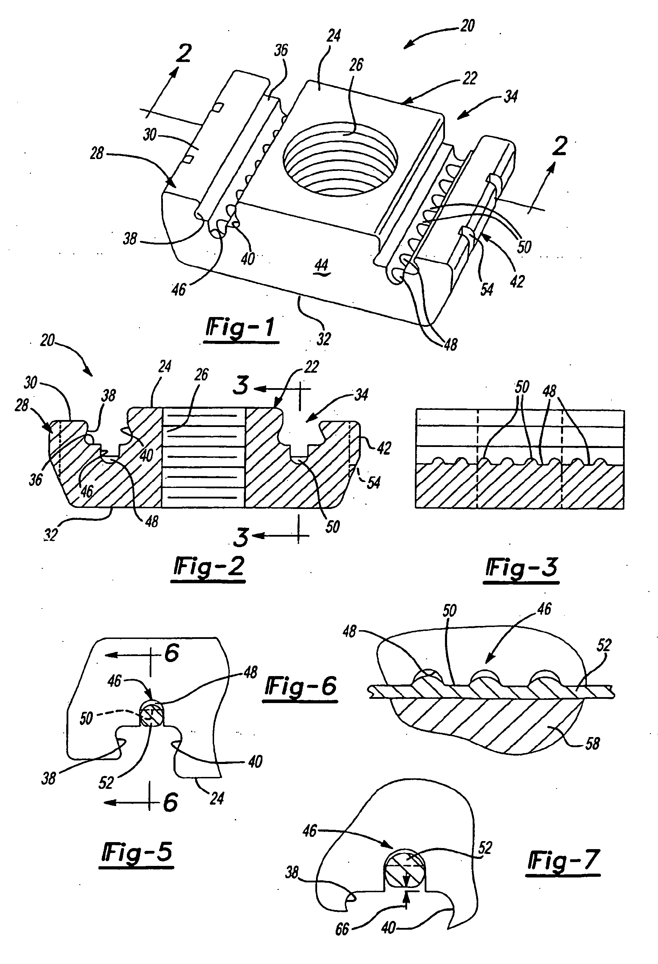

As set forth above, the present invention relates to fastener systems, particularly but not exclusively self-attaching fastener systems, including preoriented self-clinching and self-piercing and clinching nuts suitable for mass production applications, wherein the fastener is permanently installed in a metal panel. Figures 1 to 3 illustrate one preferred embodiment of a self-attaching fastener 20 of this invention. The self-attaching fastener 20 illustrated in Figures 1 to 3 may be rolled from steel bar stock as described in the above-referenced U.S. Patent No. 3,711,931, the disclosure of which is incorporated herein by reference. Further, as described above, the self-attaching fastener illustrated in Figures 1 to 3 may be used either as a self-clinching fastener, wherein the panel to which it is attached includes an opening configured to receive the central pilot portion 22 or a piercing and clinching fastener, wherein the top face or piercing face 24 of the pilot portion pierces an opening in the panel and the fastener 20 is then clinched to the panel as described further below and in the above-referenced U.S. Patent No. 3,648,747.

In the disclosed embodiment, the pilot portion-22 includes a bore 26 extending perpendicular to the top face 24 which may be threaded as shown. Alternatively, the bore 26 may be smooth and a thread forming or thread rolling male fastener element (not shown) may be threaded into the bore 26 to attach a second element to the fastener and panel assembly. A self-attaching fastener of the type disclosed herein generally also includes flange portions 28 on opposed sides of the central pilot portion 22 which receive and support the panel following installation.

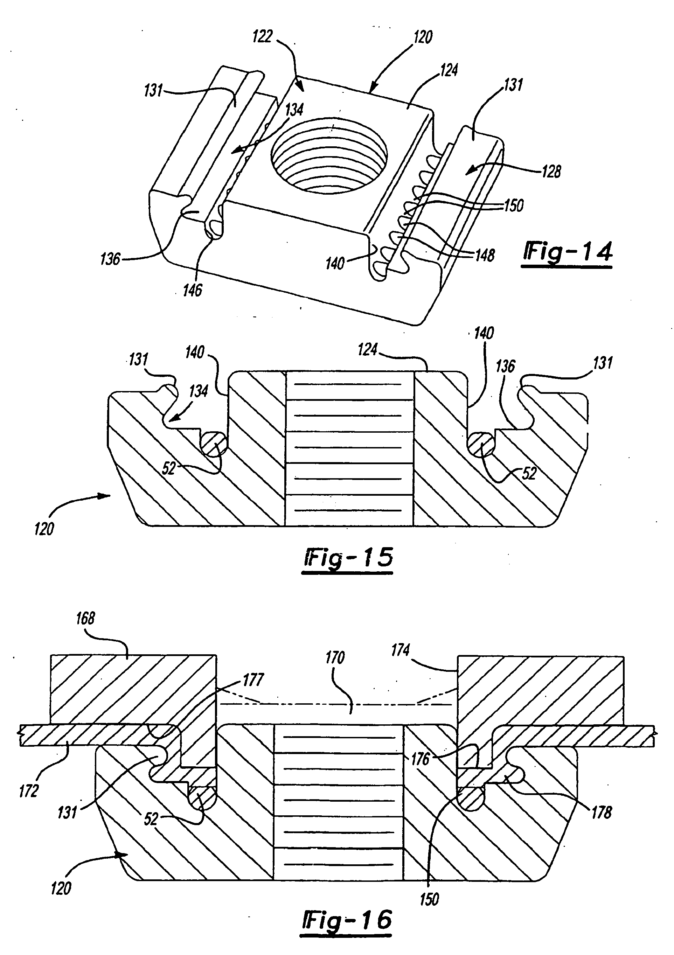

In the disclosed embodiment of the self-attaching fastener 20, the fastener includes parallel panel receiving grooves 34 which extend into the bearing faces 30 of the flange portions 28 as best shown in Figures 1 and 2. Alternatively, as described in the above-referenced U.S. Patent No. 3,711,931, the panel receiving grooves may be defined in the side faces of the pilot portion. In the disclosed embodiment, the panel receiving grooves include a bottom wall or surface 36 and inclined side walls 38 and 40 defining re-entrant dovetail-shaped grooves having a smaller opening adjacent the bearing faces 30 than at the bottom wall 36 improving the push-off force required to remove the fastener from the panel following installation. Alternatively, the inner wall 40 may extend perpendicular to the end face 24 of the pilot portion as disclosed below in regard to Figures 14 to 16. The fastener further includes side walls 42 which may be tapered from the bottom bearing face 32; as shown, to reduce the volume of metal required for forming the fastener. The end faces 44 of the fastener are generally perpendicular to the piercing face 24 because the end faces 44 are formed by cutting or chopping a rolled section as disclosed in the above-referenced U.S. Patent No. 3,711,931 and shown in Figures 21 and 22.

As described above in the Background of the Invention and shown in the above-referenced U.S. Patent No. 3,711,931, self-attaching fasteners are presently interconnected in a preoriented fastener strip for installation by an installation apparatus or head by forming wire receiving grooves in the bottom bearing surface 32 and the fasteners are interconnected by frangible metal wires which are rolled into the wire grooves and staked. This method of interconnecting self-attaching fasteners creates several problems as described above, including sharp wire tangs extending from the bearing face 32 following installation, reduced bearing area during installation and movement of the fasteners on the wires during coiling and feeding of the fastener strip. Another problem associated with feeding a fastener strip of this type is that the finger of the feed pawl is received in the bore 26 which may damage the thread cylinder whether the bore 26 is threaded or not. These problems associated with self-attaching fastener systems are solved by the embodiments of the fastener system and methods of this invention as now described below.

In the disclosed embodiments of the self-attaching fastener, the wire grooves 46 extend into the bearing face 36 of the flange portion 28. Where the self-attaching fastener 20 includes panel receiving grooves 34 as shown, the wire grooves 46 are preferably formed in the bottom wall or surface 36 of the panel receiving grooves. Alternatively, where the panel receiving groove is defined in the side walls of the central pilot portion 22 as disclosed in the above-referenced U.S. Patent No. 3,711,931, the wire receiving grooves may be formed directly in the panel supporting surfaces or bearing faces 30 of the flange portions 28 of the fastener. In the preferred embodiments, the lower surfaces of the wire grooves 46 include a plurality of spaced pockets 48 spaced by upstanding ribs 50. Stated another way, the bottom surface of the wire receiving grooves have a plurality of upstanding ribs 50 as best shown in Figure 3. As described below, the ribs or pockets prevent movement of the self-attaching fasteners on the wires 52 as described below. Further, in the preferred embodiments of the preoriented strip of self-attaching fasteners, the fastener strip includes a plurality of generally equally spaced grooves or notches for feeding the fastener strip, such as the notches 54 in the side walls of the fastener shown in Figures 1 and 2. As set forth further below, the terms "wire" or "wires" are not limited to a metal wire. Further, as described further below, a preoriented strip of self-attaching fasteners may also be formed by partially severing the pilot portion from the strip leaving frangible connector portions between the nuts in the strip.

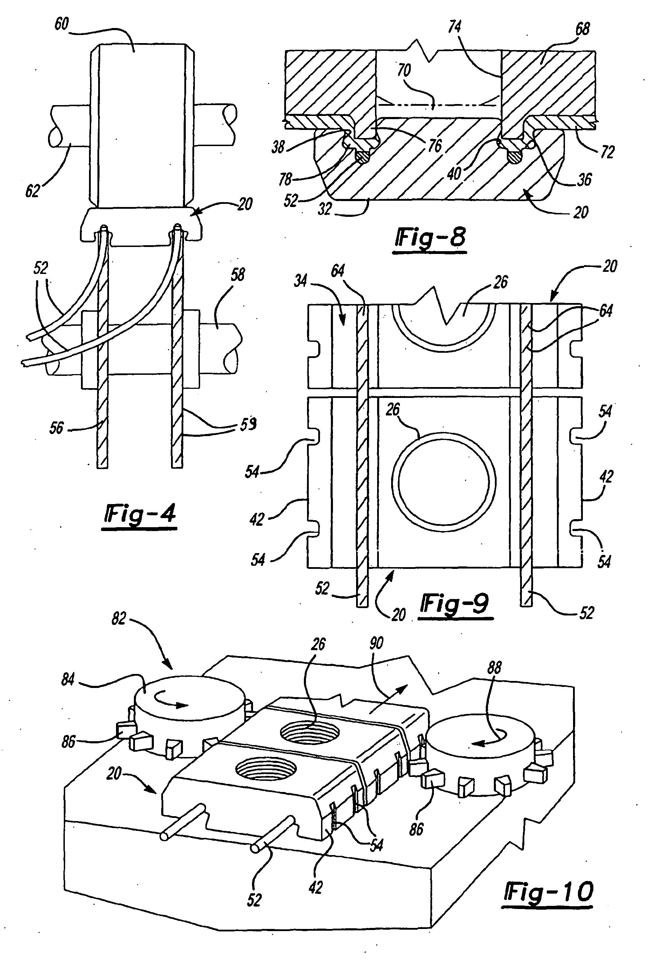

In the disclosed embodiment, the frangible wires interconnecting the self-attaching fasteners 20 are secured to the fasteners by knurling rollers 56 shown in Figure 4. The knurling rollers 56 are mounted on a suitable shaft 58 and the knurling rollers include a plurality of radially spaced splines 59. The knurling rolls 56 preferably have a width equal to or smaller than the opening of the panel receiving groove 34, but preferably wider than the width of the wire receiving grooves 46. As shown schematically in Figure 4, the self-attaching fasteners 20 are driven into engagement with the knurling rollers 56 by a roller 60 mounted on shaft 62. As shown in Figures 4, 5, 6 and 9, the knurling rollers 56 deform the wire into the pockets 48 in the lower surface of the wire receiving grooves 34, preventing movement of the fasteners 20 on the wires 52 following installation. The splined knurling rollers 56 further deform the bottom wall 36 of the panel receiving grooves 34, securing the wires 52 in the wire grooves 46 as shown by splined grooves 64 in Figure 9. Alternatively, the rollers 56 with or without splines, may have a width generally equal to or slightly smaller than the width of the opening of the wire receiving grooves 46 to deform the wires 52 into the pockets 48 and below the surface of the bottom wall or surface 36 of the panel receiving grooves as shown by dimensional arrows 66 in Figure 7. The panel 72 may then be partially deformed into the wire receiving grooves during installation of the fastener 20 to a panel as shown in Figure 8.

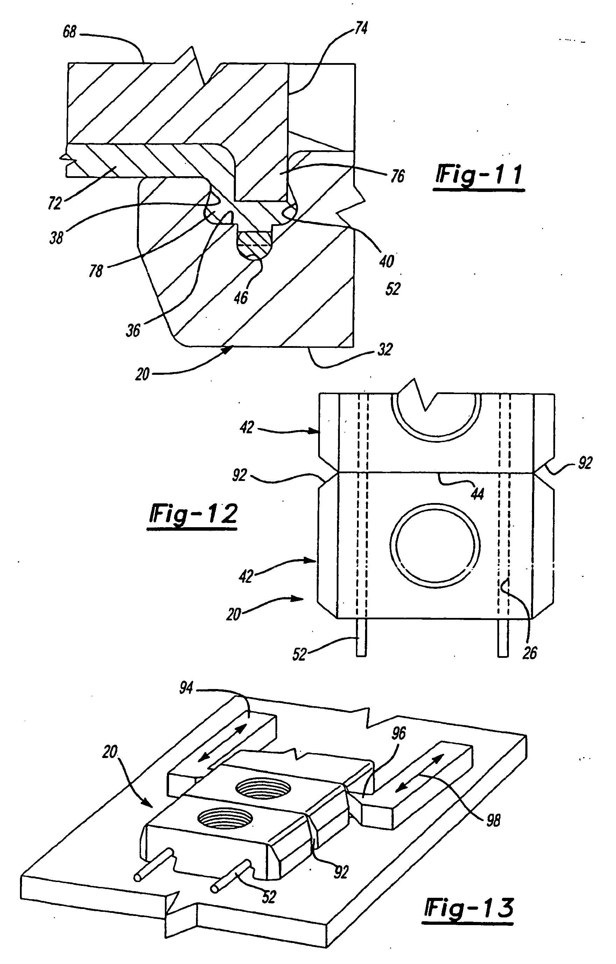

As described in the above-referenced U.S. Patent No. 3,648,747, self-attaching fasteners are normally installed in a panel by a die button 68 as shown in Figure 8. The preoriented strip of self-attaching fasteners 20 is received in an installation head (not shown) having a reciprocating plunger which is driven against the rear bearing surface 32, fracturing the frangible connector elements and driving the fastener 20 against the panel 72 which is supported on a die button 68. Where the self-attaching fastener is used as a pierce nut, the piercing surface 24 simultaneously pierces a slug 70 from the panel 72 and clinches the panel to the fastener as shown in Figure 8. The die button 68 includes a rectangular opening 74 which receives the panel slug 70 and parallel clinching lips 76 deform the panel portion 78 adjacent the pierced opening into the panel receiving grooves 34 and against the bottom wall 36. The deformation of the panel against the bottom wall 36 deforms the panel portion 78 beneath the inclined inner and outer side walls 38 and 40 of the panel receiving groove forming a very secure installation as shown in Figure 8. Where the surface of the wires 52 are deformed below the bottom wall or surface 36 of the panel receiving grooves 34, as shown in Figure 7, the panel portion 78 is also deformed into the wire grooves as shown in Figure 11.

As will be understood by those skilled in this art, the wires 52 may be formed of various materials as disclosed in the above-referenced U.S. Patent No. 3,711,931. The retaining wires 52 are preferably formed from a flexible material permitting the preoriented strip of fasteners to be rolled into a coil, but may be cut during installation of the fastener by the plunger of the installation head (not shown). Thus, the wires are preferably flexible, but frangible. A suitable material for the wires is annealed 1008 low carbon steel, which is not heat treated. This material provides more ductility and flexibility than music wire, for example, and does not dull the plunger as would music wire. Other suitable materials include monofilament nylon cord and cable and other suitable metals and polymers.

As set forth above, the preoriented fastener strip disclosed in the above-referenced U.S. Patent No. 3,711,931 are conventionally fed to the installation head (not shown) by a reciprocating pawl having a finger received in the thread cylinder 26. This method of feeding the strip of self-attaching fasteners may damage the thread cylinder 26, particularly where movement of the strip of fasteners is impeded to the installation head. As will be understood, damage to the thread cylinder may prevent use of the nut following installation. This problem has been solved in a preferred embodiment of this invention by providing grooves or notches in the side wall of the fastener strip either between adjacent fasteners or in the side wall of each nut as shown by notches 54 in Figures 1, 2, 9 and 10. As shown in Figure 10, the strip of self-attaching fasteners may then be fed to the installation head (not shown) by feeders 82 shown in Figure 10. In this embodiment, the feeders 82 include a rotatable member, wheel or ratchet 84 having a plurality of spaced radial spokes or splines 86 which are received in the grooves or notches 54 in the side walls 42 of the self-attaching fasteners 20. In the preferred embodiment, the spokes 86 are wedge-shaped to guide the spokes 86 into the notches 54. Thus, rotation of the rotatable members 84 in the direction of arrows 88 causes the preoriented strip of fasteners 20 to move in the direction of arrow 90. This feed mechanism and method of feeding the strip of fasteners thus eliminates any contact of the feeder with the thread cylinder 26.

Figures 12 and 13 illustrate an alternative feed mechanism and method of feeding a strip of fasteners, wherein the fasteners each include a chamfer 92 in the side walls adjacent in the end walls 44. The chamfers 92 create notches between the adjacent fasteners 20 as shown in Figures 12 and 13. The strip of preoriented fasteners may then be fed to the installation head by rotatable elements 82 shown in Figure 10 or by reciprocating pawls 94 shown in Figure 13. The reciprocating pawls 94 each include a wedge-shaped figure 96 which is received in the notches between the nuts defined by the chamfers 92. Upon reciprocation of the pawls 94 as shown by arrow 98, the nut strip is fed linearly. As will be understood by those skilled in this art, the pawl is rotated following each reciprocal movement to release the finger 96 from the notches. The feed pawls 94 may be spring biased (not shown) toward engagement with the notches or chamfered surfaces 92. The reciprocal movement may be provided by actuation of the installation head as disclosed in the prior art.

Figures 14 to 16 illustrate an alternative embodiment of inner walls in a self-attaching fastener. The self-attaching fastener 120 shown in Figure 14 includes a central pilot portion 122 having a top face 124 which serves as a piercing face when the fastener is used as a self-piercing fastener. The fastener includes flange portions 128 on opposed sides of the central pilot portion 122; however, in this embodiment the flange portions 128 also include an upstanding inclined deformable lip portion 131 which partially overlies the bottom wall 136 of the panel receiving grooves 134. Further, the inner wall 140 of the panel receiving grooves extend generally perpendicular to the end face 124 of the pilot portion and the wire receiving grooves 146 are adjacent the pilot portion 122, rather than generally centered in the bottom wall 136. The lower surface of the panel receiving grooves 146 include a plurality of spaced pockets 148 separated by ribs 150 as described above. The remaining features of the self-attaching fastener 120 may be identical to the fastener 20 described above and are therefore numbered in the same sequence. Thus, no further description of the fastener 120 is required.

Figure 15 illustrates the fastener 120 following receipt of the frangible wires 52 which may be installed in the wire grooves 146 by the method and apparatus described above in regard to Figure 4. Figure 16 illustrates one method of installing the fastener system illustrated in Figures 14 and 15. As described above in regard to Figure 8, a self-attaching fastener is conventionally attached to a panel 172 by a die member or die button 168. The die member 168 includes a central opening 174 which receives the panel slug 170 when the self-attaching fastener 120 is utilized as a self-piercing and clinching fastener. Alternatively, the panel includes a pre-pierced or pre-formed opening configured to receive the pilot portion 122. The die member includes projecting parallel lips 176 which deform the panel portion 178 adjacent the opening in the panel which receives the projecting pilot portion 122 and assists in piercing the panel when the self-attaching fastener 120 is used as a self-piercing fastener. In this embodiment, however, the end face 177 of the die member also deforms the upstanding lips 131 over the panel receiving groove 134, trapping the panel portion 178 in the grooves and providing a secure installation as shown in Figure 16. In this embodiment, the inner walls 140 of the panel receiving grooves 134 may also be inclined outwardly (not shown) if desired to increase the push-off strength of the fastener and panel assembly.

In a further alternative embodiment of a self-attaching fastener similar to the embodiment of a self-attaching fastener, the fastener has a central pilot portion including a top face, a threaded bore and flange portions on opposed sides of the central pilot portion. The pilot portion also includes a threaded bore extending perpendicular to the top face and the outer surface of the pilot portion tapers outwardly to increase the columnar strength of the pilot portion during piercing.

In this embodiment, the inner side wall of the wire grooves is continuous with the outer side wall of the pilot portion and inclined outwardly as shown. The outer side wall of the panel receiving groove is inclined inwardly to define a restricted opening at the bearing faces, defining a restricted or re-entrant groove as described above. In this embodiment, the wire grooves are generally tear-shaped having a lip portion partially overlying the bottom surface of the wire grooves improving retention of the wires in the wire grooves. During installation of the wire in the wire grooves, the lip portion is deformed over the wires improving the retention. The wire grooves also include a plurality of spaced pockets as described above, preventing movement of the fasteners on the wires.

A preferred method of forming self-attaching fasteners of the types described above utilizes the notches to improve the quality of the self-attaching fasteners formed. As described above, the cross-section of the self-attaching nut fasteners described above is generally formed in a rolling mill starting with a round metal wire, which is then rolled in a series of rolling operations to the desired cross-section of the nut. The rolled section or strip is received from the rolling mill by the nut manufacturer in a coil. As described above, the cross-section of the strip conforms to the desired shape of the self-attaching fasteners and thus the strip includes a continuous central pilot portion flange portions preferably on opposed sides of the pilot portion and the flange portions include side walls and panel receiving grooves as described above. In the prior method of forming self-attaching fasteners of the applicant, the fastener strip is received directly in a piercing or punching station, wherein the nut bores are first formed in the strip and the section is then cut off. The nut bores may then be threaded in a separate tapping station.

In the preferred embodiment of forming self-attaching fasteners of this invention, the fastener strip is first received in a notching or nipping station. The notching station includes an upper die and an opposed lower die, wherein the upper die includes a pair or a plurality of nipping or notching tools and the upper die is conventionally supported on die posts. As understood, the die press of the notching station may be a conventional hydraulic or pneumatic press. Thus, upon closing of the die press, the notching tools cut equally spaced notches in the side walls of the strip which are then utilized in the method of this invention to accurately locate the strip in the subsequent punching or piercing and cut-off operations described below. The configuration of the notching tools will depend upon the desired shape of the notches. As described above, the notches are preferably U-shaped as described above and shown in Figures 1, 9 and 10 or V-shaped as shown in Figures 12 and 13.

The strip having equally spaced notches is then transferred to a punching station which includes an upper die member or platen a lower die platen and a punch or punches attached to the upper die platen. In the method of forming self-attaching fasteners of this invention, the nut strip is transferred, to and accurately located in the punching station by rotatable members or wheels supported on drive shafts or posts The rotatable members each include a plurality of equally spaced teeth or splines which are received in the notches in the side walls of the strip. As will be understood, the rotatable members are driven on shafts to both transfer to and accurately locate the strip in the punching station. Upon lowering of the upper die the punches punch a slug from the strip and the slugs are then received through appropriate openings in the lower die platen. The punches punch or pierce cylindrical openings or bores in the strip In the preferred embodiment, the punch is driven through the planar end face of the pilot portion forming a chamfer at the bearing face of the section opposite the pilot portion.

The nut strip is next received in the cut-off station. The cut-off station includes an upper die member and a lower die member, wherein the cut-off blades are attached to the upper die member and the lower die member includes openings which receive the cut-off blades. The fastener strip is fed through and accurately located in the cut-off station by rotating members, which may be the same rotating members or separate indexing and locating members depending upon whether the punching station is in line with the cut-off station. As described above, the rotating members are supported on drive shafts, each including a plurality of teeth or splines which are received in the notches in the side walls of the strip. Upon closing of the die, the cut-off blades severe the strip into discreet self-attaching fasteners That is, each of the fasteners include a central pilot portion, flange portions on opposed sides of the pilot portion a panel receiving groove in the flange portions and side walls each having equally spaced notches or grooves. In the preferred embodiment, the cut-off station is in line with and receives the strip directly from the punching station. The rotating members leading to the punching station and the rotating members leading to the cut-off station are either the same rotating members or are indexed together to control the movement and location of the strip. As will now be understood, however, the indexing and location of the fastener strip in the punching station and the cut-off station assures that the bore of the self-attaching fasteners is accurately located in the pilot portion between the end walls thereby eliminating the problem associated with the present method of forming self-attaching fasteners described above.

As will now be understood from the above description of the preferred embodiments, various modifications may be made to the self-attaching fasteners, the preoriented fastener strips, method of forming a continuous preoriented strip of fasteners and methods of feeding a preoriented strip of fasteners of this invention. The fasteners may be spaced on the frangible wire connectors as shown in Figure 9 or the end faces of the fasteners may substantially abut as shown in Figure 12. The feed mechanisms for a strip of fasteners shown in Figures 10, and 13, are considered illustrative only to illustrate feed mechanisms which may be utilized with a fastener strip, wherein the fasteners or the fastener strip include spaced notches or grooves which are utilized to feed and accurately locate the fastener strip without contacting of the thread cylinder. Further, the fastener system of this invention may be utilized with self-attaching fasteners which do not include a panel receiving groove as disclosed in the above-referenced U. S. Patent No. 3,711,931, wherein the wire grooves would be formed in the bearing surface of the flange portions adjacent the pilot. As set forth above, except for the indexing means including the transfer and locating wheels, the description of the notching station punching station and cut-off station are intended to be schematic only. As will be understood by those skilled in this art, the apparatus disclosed schematically are available commercially and thus a detailed description of these apparatus is not required. However, various modifications may be made to the method of forming self-attaching fasteners. For example, the notches may be V-shaped as shown in Figures 12 and 13, wherein the cut-off blades are then aligned with the apex of the V-shaped notches or grooves forming the self-attaching fasteners shown in Figures 12 and 13. Further, the method of this invention may be used to form an integral strip of fasteners wherein only the pilot portion is severed from the strip providing frangible connector portions on opposed sides of the strip. Further, as set forth above, the preferred embodiments of the self-attaching fasteners include equally spaced notches or grooves in at least one of the side walls of the fasteners as described above. However, protrusions can also be formed in the side walls in the rolling process, for example, which provide abutment surfaces for forming self-attaching fasteners and feeding a strip of fasteners as described above.

## Claims

1. A method of feeding a preoriented strip of self-attaching fasteners (20) to an installation head, said method comprising the following steps:
forming a continuous strip of self-attaching fasteners (20) interconnected by frangible connectors, each fastener (20) having a bore (26), a top face (24) extending generally perpendicular to said bore (26), end faces (44) and side faces (42);
forming a plurality of substantially equally spaced abutment surfaces in at least one side face (42) of side walls of said preoriented strip of self-attaching fasteners (20) and
receiving a driving member seriatim against at least one of said abutment surfaces and moving said driving member to drive said strip of self-attaching fasteners (20) to an installation head.

2. The method of feeding a preoriented strip of self-attaching fasteners (20) to an installation head as defined in claim 1, wherein said method includes forming notches (54) between adjacent fasteners (20) in said continuous strip of said self-attaching fasteners (20).

3. The method of feeding a preorientated strip of self-attaching fasteners (20) to an installation head as defined in claim 2, wherein said method includes forming a plurality of generally rectangular self-attaching fasteners (20) each fastener (20) having said end face (44) in nearly abutting relation in said strip of self-attaching fasteners (20) and forming a chamfered surface (92) at said end faces (44) of said fasteners (20) forming said abutment surfaces (92).

4. The method of feeding a preoriented strip of self-attaching fasteners (20) to an installation head as defined in claim 1, wherein said method includes forming a plurality of spaced notches (54) in said side faces (42) of each of said fasteners (20).

5. The method of feeding a preoriented strip of self-attaching fasteners (20) to an installation head as defined in claim 1, wherein said driving member comprises a rotable member (84) having a plurality of spaced radial spokes (86), said method including forming equally spaced notches (54) in said side wall of said strip of self-attaching fasteners (20) including said abutment surfaces, rotating said driving member to receive said radial spokes (86) in said plurality of substantially equally spaced notches (54) in said continuous strip of fasteners (20), driving said strip of fasteners (20) to an installation head.

6. The method of feeding a preoriented strip of self-attaching fasteners (20) to an installation head as defined in claim 1, wherein said drive member includes a reciprocal pawl (94) having an end portion configured to be received against said abutment surfaces, and said method including receiving said end portion of said pawl (94) against one of said abutment surfaces and moving said pawl (94) to drive said strip of fasteners (20).

7. A continuous strip of fasteners (20) for attachment to a panel (72), comprising:
a plurality of generally rectangular fasteners (20), each fastener (20) including end faces (44) and side faces (42), a central projecting pilot (22) having a bore (26) therethrough and a flange portion (28) on opposed sides of said pilot portion (22) having a panel engaging surface adjacent said pilot portion (22), and a frangible connector interconnecting said fasteners (20) in end to end relation in a continuous strip, **characterised by** a plurality of substantially equally spaced abutment surfaces in said strip of fasteners (20) at said side faces (42) of said strip of fasteners (20) for driving said strip of fasteners to an installation head.

8. The continuous strip of fasteners (20) for attachment to a panel (72) as defined in claim 7, wherein said plurality of substantially equally spaced abutment surfaces is defined by a chamfer (92) in the end faces (44) of adjacent fasteners (20) in said continuous strip of fasteners (20).

9. The continuous strip of fasteners (20) for attachment to a panel (72) as defined in claim 7, wherein said substantially equally spaced abutment surfaces comprise a plurality of spaced notches (54) defined in said side faces (42) of each of said fasteners (20).

10. The continuous strip of fasteners (20) for attachment to a panel (72) as defined in claim 7, wherein said panel engaging surface of each of said fasteners (20ß) includes a wire groove (46) and said frangible connector comprises a continuous frangible wire (52) in said wire grooves (46) interconnecting adjacent fasteners (20) in said continuous strip of fasteners (20).

11. The continuous strip of fasteners (20) for attachment to a panel (72) as defined in claim 10, wherein each of said fasteners (20) includes a panel receiving groove (34) extending into said flange portions (28) on opposed sides of said pilot portion (22) adjacent said pilot portion (22) and said wire grooves (46) are located in a lower surface of said panel receiving grooves (34).

12. A method of forming self-attaching fasteners (20), comprising the following steps:
forming a continuous metal strip having a cross-section of the self-attaching fasteners (20) to be formed including a pilot portion (22) projecting from a central portion of said strip and flange portions (28) on opposed sides of said pilot portion (22), said flange portions each including a bearing face (30) spaced below an end face (24) of said pilot portion (22) and a side face (42);
forming a plurality of equally spaced notches (54) in at least one of said side faces (42) of said strip;
locating a first portion of said strip opposite a punch by receiving a locating member in one of said notches (54), then moving said punch to pierce a bore in said strip, advancing said strip and locating a second portion of said strip opposite said punch by receiving said locating member in a second one of said notches (54), thereby forming a plurality of equally spaced bores in said strip; and
locating said strip opposite a cut-off tool by receiving a locating member in one of said notches (54) and moving said cut-off tool to at least partially severe said strip spaced equidistant between two of said plurality of equally spaced bores, forming a self-attaching fastener.

13. The method of forming self-attaching fasteners (20) as defined in claim 12, wherein said method includes advancing said strip by moving said locating member.

14. The method of forming self-attaching fasteners (20) as defined in claim 12, wherein said method includes severing said strip by moving said cut-off tool through said strip, thereby forming a plurality of discreet self-attaching fasteners (20), then interconnecting said self-attaching fasteners by attaching a frangible connector element extending between said self-attaching fasteners (20).

15. The method of forming self-attaching fasteners (20)as defined in claim 14, wherein said method includes forming a groove (46) in said flange portions (28) of said strip and locating a wire (52) in said groove (46) of adjacent fasteners (20).

16. The method of forming self-attaching fasteners (20) as defined in claim 12, wherein said method includes forming a plurality of equally spaced U-shaped notches (54) in said at least one side face (42) of said strip.

17. The method of forming attaching fasteners (20) as defined in claim 16, wherein said method includes forming said plurality of equally spaced V-shaped notches (54) in each of said side faces (42) of said strip.

18. The method of forming self-attaching fasteners (20) as defined in claim 17, wherein said method includes forming said V-shaped notches (54) in each of said side faces (42) of said strip, locating said strip opposite said cut-off tool with said cut-off tool aligned with said V-shaped notches (54) and severing said strip through said V-shaped notches (54) forming a plurality of discreet self-attaching fasteners (20) each having a chamfered surface (92) at the corners of said self-attaching fasteners (20).

19. The method of forming self-attaching fasteners (20) as defined in any of claims 12 to 18, wherein the self-attaching fasteners (20) are self-attaching female fasteners (20).

20. The method of forming self-attaching fasteners (20) as defined in any of claims 12 to 19, wherein the pilot portion (22) is a continuous pilot portion (22).

21. The method of forming self-attaching fasteners (20) as defined in any of claims 12 to 20, wherein the punch is a cylindrical punch.

22. The method of forming self-attaching fasteners (20) as defined in any of claims 12 to 21, wherein said plurality of equally spaced notches (54) are formed in said side faces (42) of said strip and said first portion of said strip is located opposite a punch by receiving a locating member in one of said notches (54) in each of said side faces (42) of said strip.

23. The method of terming self-attaching fasteners (20) as defined in claim 22, wherein said method further includes forming a grooves (46) in said flange portions (28) of said strip and interconnecting said discreet self-attaching fasteners (20) by locating a continuous frangible connector element in said groove (46) of adjacent fasteners (20).

## Patentansprüche

1. Ein Verfahren zum Zuführen eines vororientierten Streifens von selbstbefestigenden Befestigungselementen (20) zu einem Installationskopf, das Verfahren weist die folgenden Schritte auf:
Bilden eines kontinuierlichen Streifens von selbstbefestigenden Befestigungselementen (20) verbunden miteinander durch zerbrechliche Verbinder, jedes Befestigungselement (20) weist auf eine Bohrung (26), eine obere Fläche (24) erstreckend im Allgemeinen senkrecht zu der Bohrung (26), Endflächen (44) und Seitenflächen (42);
Bilden einer Mehrzahl von im Wesentlichen gleich beabstandeten Anschlagflächen in mindestens einer Seitenfläche (42) von Seitenwänden von dem vororientierten Streifen von selbstbefestigenden Befestigungselementen (20) und
Empfangen eines Vortriebbauteils in Reihe angeordnet gegen mindestens eine von den Anschlagflächen und Bewegen des Vortriebbauteils, um den Streifen von selbstbefestigenden Befestigungselementen (20) zu einem Installationskopf vorzutreiben.

2. Ein Verfahren zum Zuführen eines vororientierten Streifens von selbstbefestigenden Befestigungselementen (20) zu einem Installationskopf, wie es in Anspruch 1 definiert ist, wobei das Verfahren beinhaltet Bilden von Einkerbungen (54) zwischen benachbarten Befestigungselementen (20) in dem kontinuierlichen Streifen von den selbstbefestigenden Befestigungselementen (20).

3. Das Verfahren zum Zuführen eines vororientierten Streifens von selbstbefestigenden Befestigungselementen (20) zu einem Installationskopf, wie es in Anspruch 2 definiert ist, wobei das Verfahren beinhaltet Bilden einer Mehrzahl von im Allgemeinen rechteckigen selbstbefestigenden Befestigungselementen (20), jedes Befestigungselement (20) hat die Endfläche (44) in fast aneinander stoßender Beziehung in den Streifen von selbstbefestigenden Befestigungselementen (20) und Bilden einer abgeschrägten Oberfläche (92) an den Endflächen (44) von den Befestigungselementen (20) bildend die Anschlagflächen (92).

4. Das Verfahren zum Zuführen eines vororientierten Streifens von selbstbefestigenden Befestigungselementen (20) zu einem Installationskopf, wie es in Anspruch 1 definiert ist, wobei das Verfahren beinhaltet Bilden einer Mehrzahl von beabstandeten Einkerbungen (54) in den Seitenflächen (42) von jedem von den Befestigungselementen (20).

5. Das Verfahren zum Zuführen eines vororientierten Streifens von selbstbefestigenden Befestigungselementen (20) zu einem Installationskopf, wie es in Anspruch 1 definiert ist, wobei das Vortriebbauteil aufweist ein drehbares Bauteil (84) mit einer Mehrzahl von beabstandeten radialen Speichen (86), wobei das Verfahren beinhaltet Bilden gleich beabstandeter Einkerbungen (54) in der Seitenwand von dem Streifen von selbstbefestigenden Befestigungselementen (20) beinhaltend die Anschlagflächen, Drehen des Vortriebbauteils zum Empfangen der radialen Speichen (86) in der Mehrzahl von im Wesentlichen gleich beabstandeten Einkerbungen (54) in dem kontinuierlichen Streifen von Befestigungselementen (20), Vortreiben des Streifens von Befestigungselementen (20) zu einem Installationskopf.

6. Das Verfahren zum Zuführen eines vororientierten Streifens von selbstbefestigenden Befestigungselementen (20) zu einem Installationskopf, wie es in Anspruch 1 definiert ist, wobei das Vortriebbauteil beinhaltet eine sich hin- und herbewegende Klinke (94) mit einem Endbereich konfiguriert, um gegen die Anschlagflächen empfangen zu werden und das Verfahren beinhaltet Empfangen des Endbereichs von der Klinke (94) gegen eine von den Anschlagflächen und Bewegen der Klinke (94) zum Vortreiben des Streifens von Befestigungselementen (20).

7. Ein kontinuierlicher Streifen von Befestigungselementen (20) zum Befestigen an einem Paneel (72) aufweisend:
eine Mehrzahl von im Allgemeinen rechteckigen Befestigungselementen (20) jedes Befestigungselement (20) beinhaltet Endflächen (44) und Seitenflächen (42), einen zentralen hervorstehenden Pilot (22) mit einer Bohrung (26) **dadurch** und einem Flanschbereich (28) auf gegenüberliegenden Seiten von dem Pilotteil (22) mit einer in das Paneel eingreifenden Oberfläche benachbart zu dem Pilotteil (20) und einen zerbrechlichen Verbinder, der die Befestigungselemente (20) in einer Ende-zu-Ende Beziehung in einem kontinuierlichen Streifen miteinander verbindet, **gekennzeichnet durch** eine Mehrzahl von im Wesentlichen gleich beabstandeten Anschlagflächen in dem Streifen von Befestigungselementen (20) an den Seitenflächen (42) von dem Streifen von Befestigungselementen (20) zum Vortreiben des Streifens von Befestigungselementen zu einem Installationskopf.

8. Der kontinuierliche Streifen von Befestigungselementen (20) zum Befestigen an einem Paneel (72), wie er in Anspruch 7 definiert ist, wobei die Mehrzahl von im Wesentlichen gleich beabstandeten Anschlagflächen definiert ist durch eine Abschrägung (92) in den Endflächen (44) von benachbarten Befestigungselementen (20) in dem kontinuierlichen Streifen von Befestigungselementen (20).

9. Der kontinuierliche Streifen von Befestigungselementen (20) zum Befestigen an einem Paneel (72), wie er in Anspruch 7 definiert ist, wobei die im Wesentlichen gleich beabstandeten Anschlagflächen eine Mehrzahl von beabstandeten Einkerbungen (54) definiert in den Seitenflächen (42) von jedem von den Befestigungselementen (20) aufweisen.

10. Der kontinuierliche Streifen von Befestigungselementen (20) zum Befestigen an einem Paneel (72), wie er in Anspruch 7 definiert ist, wobei die in das Paneel eingreifende Oberfläche von jedem von den Befestigungselementen (20) eine Drahtnut (46) beinhaltet und der zerbrechliche Verbinder weist auf einen kontinuierlichen zerbrechlichen Draht (52) in den Drahtnuten (46) zum miteinander Verbinden benachbarter Befestigungselemente (20) in dem kontinuierlichen Streifen von Befestigungselementen (20).

11. Der kontinuierliche Streifen von Befestigungselementen (20) zum Befestigen an einem Paneel (72), wie er in Anspruch 10 definiert ist, wobei jedes von den Befestigungselementen (20) beinhaltet eine das Paneel aufnehmende Nut (34) erstreckend in die Flanschbereiche (28) auf gegenüberliegenden Seiten von dem Pilotbereich (22) benachbart dem Pilotbereich (22) und die Drahtnuten (46) sind angeordnet in einer niedrigeren Oberfläche von den das Paneel aufnehmenden Nuten (34).

12. Ein Verfahren zum Bilden selbstbefestigender Befestigungselementen (20) aufweisend die folgenden Schritte:
Bilden eines kontinuierlichen Metallstreifens mit einem Querschnitt von den selbstbefestigenden Befestigungselementen (20), die gebildet werden sollen, beinhaltend einen Pilotbereich (22) hervorstehend von einem zentralen Bereich von dem Streifen und Flanschbereiche (28) an gegenüberliegenden Seiten von dem Pilotbereich (22), die Flanschbereiche beinhalten jeweils eine Auflagefläche (30) beabstandet unter einer Endfläche (24) von dem Pilotbereich (22) und eine Seitenfläche (42);
Bilden einer Mehrzahl von gleich beabstandeten Einkerbungen (54) in mindestens einer von den Seitenflächen (42) von dem Streifen;
Anordnen eines ersten Bereichs von dem Streifen gegenüber einem Stempel durch Empfangen eines Anordnungsbauteils in einer von den Einkerbungen (54), dann Bewegen des Stempels zum Schneiden einer Bohrung in den Streifen, Vortreiben des Streifens und Anordnen eines zweiten Bereichs von dem Streifen gegenüber dem Stempel durch Empfangen des Anordnungsbauteils in einer zweiten von den Einkerbungen (54), dabei Bilden einer Mehrzahl von gleich beabstandeten Bohrungen in dem Streifen; und
Anordnen des Streifens gegenüber eines Abschneidewerkzeugs durch Empfangen eines Anordnungsbauteils in einer von den Einkerbungen (54) und Bewegen des Abschneidewerkzeugs, um zumindest teilweise den Streifen zu trennen, beabstandet auf gleiche Distanz zwischen zwei von der Mehrzahl von gleich beabstandeten Bohrungen bildend ein selbstbefestigendes Befestigungselement.

13. Das Verfahren zum Bilden selbstbefestigender Befestigungselemente (20), wie es in Anspruch 12 definiert ist, wobei das Verfahren beinhaltet Vortreiben des Streifens durch Bewegen der Anordnungsbauteile.

14. Das Verfahren zum Bilden selbstbefestigender Befestigungselemente (20), wie es in Anspruch 12 definiert ist, wobei das Verfahren beinhaltet Trennen des Streifens durch Bewegen des Abschneidewerkzeugs durch den Streifen, dabei Bilden einer Mehrzahl von diskreten selbstbefestigenden Befestigungselemente (20), dann Verbinden miteinander der selbstbefestigenden Befestigungselemente durch Befestigen eines zerbrechlichen Verbindungselements erstreckend zwischen den selbstbefestigenden Befestigungselementen (20).

15. Das Verfahren zum Bilden selbstbefestigender Befestigungselemente (20), wie es in Anspruch 14 definiert ist, wobei das Verfahren beinhaltet Bilden einer Nut (46) in den Flanschbereichen (28) von dem Streifen und Anordnen eines Drahtes (52) in der Nut (46) von benachbarten Befestigungselementen (20).

16. Das Verfahren zum Bilden selbstbefestigender Befestigungselemente (20), wie es in Anspruch 12 definiert ist, wobei das Verfahren beinhaltet Bilden einer Mehrzahl von gleich beabstandeten U-förmigen Einkerbungen (54) in der zumindest einer Seitenfläche (42) von dem Streifen.

17. Das Verfahren zum Bilden selbstbefestigender Befestigungselemente (20), wie es in Anspruch 16 definiert ist, wobei das Verfahren beinhaltet Bilden der Mehrzahl von gleich beabstandeten V-förmigen Nuten (54) in jeder von den Seitenflächen (42) von dem Streifen.

18. Das Verfahren zum Bilden selbstbefestigender Befestigungselemente (20), wie es in Anspruch 17 definiert ist, wobei das Verfahren beinhaltet Bilden der V-förmigen Nuten (54) in jeder von den Seitenflächen (42) von dem Streifen, Anordnen des Streifens gegenüber einem Abschneidewerkzeug, mit dem Abschneidewerkzeug ausgerichtet mit den V-förmigen Nuten (54) und Trennen des Streifens durch die V-förmigen Nuten (54) bildend eine Mehrzahl von diskreten selbstbefestigenden Befestigungselementen (20), jedes aufweisend eine abgeschrägte Oberfläche (92) an den Ecken von den selbstbefestigenden Befestigungselementen (20).

19. Das Verfahren zum Bilden selbstbefestigender Befestigungselemente (20), wie es in jeglichem von den Ansprüchen 12 bis 18 definiert ist, wobei die selbstbefestigenden Befestigungselemente (20) selbstbefestigende weibliche Befestigungselement (20) sind.

20. Das Verfahren zum Bilden selbstbefestigender Befestigungselemente (20), wie es in jeglichem von den Ansprüchen 12 bis 19 definiert ist, wobei der Pilotbereich (22) ein kontinuierlicher Pilotbereich (22) ist.

21. Das Verfahren zum Bilden selbstbefestigender Befestigungselemente (20), wie es in jeglichem von den Ansprüchen 12 bis 20 definiert ist, wobei der Stempel ein zylindrischer Stempel ist.

22. Das Verfahren zum Bilden selbstbefestigender Befestigungselemente (20), wie es in jeglichem von den Ansprüchen 12 bis 21 definiert ist, wobei die Mehrzahl von gleich beabstandeten Einkerbungen (54) gebildet wird in den Seitenflächen (42) von dem Streifen und der erste Bereich von dem Streifen angeordnet ist gegenüber einem Stempel durch Empfang eines Anordnungsbauteils in einer von den Nuten (54) in jeder von den Seitenflächen (42) von dem Streifen.

23. Das Verfahren zum Bilden selbstbefestigender Befestigungselemente (20), wie es in Anspruch 22 definiert ist, wobei das Verfahren weiter beinhaltet Bilden einer Nut (46) in den Flanschbereichen (28) von dem Streifen und miteinander Verbinden der diskreten selbstbefestigenden Befestigungselemente (20) durch Anordnen eines kontinuierlichen zerbrechlichen Verbinderelements in der Nut (46) von benachbarten Befestigungselementen (20).

## Revendications

1. Procédé d'envoi d'une bande préorientée d'attaches auto-fixantes (20) à une tête d'installation, ledit procédé comprenant les étapes suivantes :
la formation d'une bande continue d'attaches auto-fixantes (20) interconnectées par des connecteurs cassables, chaque attache (20) ayant un alésage (26), une face supérieure (24) s'étendant généralement dans le sens perpendiculaire par rapport audit alésage (26), des faces terminales (44) et des faces latérale (42) ;
la formation d'une pluralité de surfaces de butée espacées selon une distance sensiblement égale dans au moins une face latérale (42) des parois latérales de ladite bande préorientée d'attaches auto-fixantes (20) et
la réception d'un élément d'entraînement en série contre au moins une desdites surfaces de butée et le déplacement dudit élément d'entraînement pour entraîner ladite bande d'attaches auto-fixantes (20) vers une tête d'installation.

2. Procédé d'envoi d'une bande préorientée d'attaches auto-fixantes (20) à une tête d'installation tel que défini dans la revendication 1, lequel procédé comprend la formation d'encoches (54) entre les attaches adjacentes (20) dans ladite bande continue desdites attaches auto-fixantes (20).

3. Procédé d'envoi d'une bande préorientée d'attaches auto-fixantes (20) à une tête d'installation tel que défini dans la revendication 2, lequel procédé comprend la formation d'une pluralité d'attaches auto-fixantes (20) généralement rectangulaires, chaque attache (20) ayant ladite face terminale (44) dans une relation quasiment en butée dans ladite bande d'attaches auto-fixantes (20) et la formation d'une surface chanfreinée (92) au niveau desdites faces terminales (44) desdites attaches (20) formant lesdites surfaces de butée (92).

4. Procédé d'envoi d'une bande préorientée d'attaches auto-fixantes (20) à une tête d'installation tel que défini dans la revendication 1, lequel procédé comprend la formation d'une pluralité d'encoches espacées (54) dans lesdites faces latérales (42) de chacune desdites attaches (20).

5. Procédé d'envoi d'une bande préorientée d'attaches auto-fixantes (20) à une tête d'installation tel que défini dans la revendication 1, dans lequel ledit élément d'entraînement comprend un élément rotatif (84) ayant une pluralité de rayons radiaux espacés (86), ledit procédé comprenant la formation d'encoches espacées selon une distance égale (54) dans ladite paroi latérale de ladite bande d'attaches auto-fixantes (20) comprenant lesdites surfaces de butée, la rotation dudit élément d'entraînement pour recevoir lesdits rayons radiaux (86) dans ladite pluralité d'encoches espacées selon une distance sensiblement égale (54) dans ladite bande d'attaches (20) continue, l'entraînement de ladite bande d'attaches (20) vers une tête d'installation.

6. Procédé d'envoi d'une bande préorientée d'attaches auto-fixantes (20) à une tête d'installation tel que défini dans la revendication 1, dans lequel ledit élément d'entraînement comprend un cliquet réciproque (64) ayant une partie-terminale configurée pour être reçue contre lesdites surfaces de butée, et ledit procédé comprenant la réception de ladite partie terminale dudit cliquet (94) contre l'une desdites surfaces de butée et le déplacement dudit cliquet (94) pour entraîner ladite bande d'attaches (20).

7. Bande d'attaches (20) continue pour une fixation à un panneau (72), comprenant :
une pluralité d'attaches généralement rectangulaires (20), chaque attache (20) comprenant des faces terminales (44) et des faces latérales (42), un pilote saillant central (22) ayant un alésage (26) à travers celui-ci et une partie formant collerette (28) sur les côtés opposés de ladite partie pilote (22) ayant une surface s'engageant dans le panneau à côté de ladite partie pilote (22), et un connecteur cassable interconnectant lesdites attaches (20) dans une relation de bout en bout dans une bande continue, **caractérisée par** une pluralité de surfaces de butée espacées selon une distance sensiblement égale dans ladite bande d'attaches (20) au niveau desdites faces latérales (42) de ladite bande d'attaches (20) pour entraîner lesdites bandes d'attaches vers une tête d'installation.

8. Bande d'attaches (20) continue pour une fixation à un panneau (72) telle que définie dans la revendication 7, dans laquelle ladite pluralité de surfaces de butée espacées à une distance sensiblement égale est définie par un chanfrein (92) dans les faces terminales (44) des attaches adjacentes (20) dans ladite bande d'attaches (20) continue.

9. Bande d'attaches (20) continue pour une fixation à un panneau (72) telle que définie dans la revendication 7, dans laquelle lesdites surfaces de butée espacées à une distance sensiblement égale comprennent une pluralité d'encoches espacées (54) définies dans lesdites faces latérales (42) de chacune desdites attaches (20).

10. Bande d'attaches (20) continue pour une fixation à un panneau (72) telle que définie dans la revendication 7, dans laquelle ladite surface s'engageant dans le panneau de chacune desdites attaches (20ß) comprend une rainure métallique (46) et ledit connecteur cassable comprend un fil métallique cassable continu (52) dans lesdites rainures métalliques (46) interconnectant les attaches adjacentes (20) dans ladite bande d'attaches (20) continue.

11. Bande d'attaches (20) continue pour une fixation à un panneau (72) telle que définie dans la revendication 10, dans laquelle chacune desdites attaches (20) comprend une encoche de réception du panneau (34) s'étendant dans lesdites parties formant collerette (28) sur les côtés opposés de ladite partie pilote (22) à côté de ladite partie pilote (22) et lesdites rainures métalliques (46) sont situées dans une surface inférieure desdites encoches de réception du panneau (34).

12. Procédé de formation d'attaches auto-fixantes (20), comprenant les étapes suivantes :
la formation d'une bande de métal continue ayant une section transversale des attaches auto-fixantes (20) devant être formées comprenant une partie pilote (22) faisant saillie depuis une partie centrale de ladite bande et des parties formant collerette (28) sur les côtés opposés de ladite partie pilote (22), lesdites parties formant collerette comprenant chacune une face de roulement (30) espacée au-dessous d'une face terminale (24) de ladite partie pilote (22) et une face latérale (42) ;
la formation d'une pluralité d'encoches espacées selon une distance égale (54) dans au moins l'une desdites faces latérales (42) de ladite bande ;
le positionnement d'une première partie de ladite bande à l'opposé d'un poinçon en recevant un élément de positionnement dans l'une desdites encoches (54), puis le déplacement dudit poinçon pour percer un alésage dans ladite bande, l'avancée de ladite bande et le positionnement d'une deuxième partie de ladite bande à l'opposé dudit poinçon en recevant ledit élément de positionnement dans une deuxième desdites encoches (54), d'où la formation d'une pluralité d'alésages espacés selon une distance égale dans ladite bande ; et
le positionnement de ladite bande à l'opposé d'un outil de tranchage en recevant un élément de positionnement dans l'une desdites encoches (54) et le déplacement dudit outil de tranchage pour au moins partiellement découper ladite bande espacée de manière équidistante entre deux de ladite pluralité d'alésages espacés selon une distance égale, la formation d'une attache auto-fixante.

13. Procédé de formation d'attaches auto-fixantes (20) tel que défini dans la revendication 12, lequel procédé comprend l'avancée de ladite bande en déplaçant ledit élément de positionnement.

14. Procédé de formation d'attaches auto-fixantes (20) tel que défini dans la revendication 12, lequel procédé comprend la découpe de ladite bande en déplaçant ledit outil de tranchage à travers ladite bande, d'où la formation d'une pluralité d'attaches auto-fixantes (20) séparées, puis l'interconnexion desdites attaches auto-fixantes en attachant un élément de connexion cassable s'étendant entre lesdites attaches auto-fixantes (20).

15. Procédé de formation d'attaches auto-fixantes (20) tel que défini dans la revendication 14, lequel procédé comprend la formation d'une rainure (46) dans lesdites parties formant collerette (28) de ladite bande et le positionnement d'un fil métallique (52) dans ladite rainure (46) d'attaches adjacentes (20).

16. Procédé de formation d'attaches auto-fixantes (20) tel que défini dans la revendication 12, lequel procédé comprend la formation d'une pluralité d'encoches en U espacées selon une distance égale (54) dans ladite au moins une face latérale (42) de ladite bande.

17. Procédé de formation d'attaches auto-fixantes (20) tel que défini dans la revendication 16, lequel procédé comprend la formation de ladite pluralité d'encoches en V espacées selon une distance égale (54) dans chacune desdites faces terminales (42) de ladite bande.

18. Procédé de formation d'attaches auto-fixantes (20) tel que défini dans la revendication 17, lequel procédé comprend la formation de ladite pluralité d'encoches en V espacées selon une distance égale (54) dans chacune desdites faces terminales (42) de ladite bande, le positionnement de ladite bande à l'opposé dudit outil de tranchage avec ledit outil de tranchage aligné avec lesdites encoches en V (54) et la découpe de ladite bande à travers lesdites encoches en V (54), la formation d'une pluralité d'attaches auto-fixantes (20) séparées ayant chacune une surface chanfreinée (92) aux coins desdites attaches auto-fixantes (20).

19. Procédé de formation d'attaches auto-fixantes (20) tel que défini dans l'une quelconque des revendications 12 à 18, dans lequel les attaches auto-fixantes (20) sont des attaches femelles auto-fixantes (20).

20. Procédé de formation d'attaches auto-fixantes (20) tel que défini dans l'une quelconque des revendications 12 à 19, dans lequel la partie pilote (22) est une partie pilote continue (22).

21. Procédé de formation d'attaches auto-fixantes (20) tel que défini dans l'une quelconque des revendications 12 à 20, dans lequel le poinçon est un poinçon cylindrique.

22. Procédé de formation d'attaches auto-fixantes (20) tel que défini dans l'une quelconque des revendications 12 à 21, dans lequel ladite pluralité d'encoches espacées à une distance égale (54) est formée dans lesdites faces latérales (42) de ladite bande et ladite première partie de ladite bande est située à l'opposé d'un poinçon en recevant un élément de positionnement dans l'une desdites encoches (54) dans chacune desdites faces latérales (42) de ladite bande.

23. Procédé de formation d'attaches auto-fixantes (20) tel que défini dans la revendication 22, lequel procédé comprend également la formation d'une rainure (46) dans lesdites parties formant collerette (28) de ladite bande et l'interconnexion desdites attaches auto-fixantes (20) séparées en positionnant un élément de connexion cassable continu dans ladite rainure (46) d'attaches adjacentes (20).
